Europäisches Patentamt

European Patent Office

Office européen des brevets

(11) Numéro de publication: **0 373 090**
**A1**

## (12) DEMANDE DE BREVET EUROPEEN

(21) Numéro de dépôt: 89470025.1

(22) Date de dépôt: 22.11.89

(51) Int. Cl.5: **F16K 5/06, F16K 31/04**

(30) Priorité: 09.12.88 FR 8816235

(43) Date de publication de la demande:
**13.06.90 Bulletin 90/24**

(84) Etats contractants désignés:
**DE ES FR GB IT NL**

(71) Demandeur: **G.R.I.- SAPAG**
**Zone Industrielle de la Croix de Metz**
**F-54200 Toul(FR)**

(72) Inventeur: **Mignot, Jacques**
**113 Rue Roger Bérin**
**F-54270 Essey-les-Nancy(FR)**

(74) Mandataire: **Puit, Thierry et al**
**Centre de Recherches de Pont-à-Mousson**
**Service de Propriété Industrielle Boîte**
**Postale 109**
**F-54704 Pont-à-Mousson Cédex(FR)**

(54) **Robinet équipé d'une embase de support pour un dispositif actionneur.**

(57) Robinet (1) comportant un organe obturateur tournant (2) muni d'une tige de manoeuvre (6) saillant hors du corps de robinet renfermant ledit organe obturateur, ce robinet étant en outre équipé d'une embase (9) solidaire du corps de robinet et agencée pour supporter un dispositif actionneur (12) accouplé à la susdite tige de manoeuvre (6), caractérisé en ce que l'embase (9) et le corps de robinet ou une partie (3) du corps de robinet renfermant l'organe obturateur tournant sont constitués sous forme d'une pièce unique monobloc, l'embase étant munie d'un passage traversant pour la tige de manoeuvre et étant munie d'au moins une lumière (15) latérale faisant communiquer ledit passage avec l'extérieur.

FIG.1.

## Robinet équipé d'une embase de support pour un dispositif actionneur.

La présente invention concerne des perfectionnements apportés aux robinets comportant un organe obturateur tournant muni d'une tige de manoeuvre saillant hors du corps de robinet renfermant ledit organe obturateur, ce robinet étant en outre équipé d'une embase solidaire du corps de robinet et agencé pour supporter un dispositif actionneur accouplé à la susdite tige de manoeuvre.

On connaît des robinets, notamment à organe tournant sphérique, qui sont équipés, pour leur motorisation, d'une pièce d'adaptation ou embase rapportée et fixée sur le corps de robinet et recevant le dispositif actionneur. Ce dispositif actionneur, étant souvent volumineux, doit être disposé en position degagée à l'écart du corps de robinet et l'accouplement de l'arbre de sortie du dispositif actionneur et de l'axe d'entraînement de l'organe obturateur du robinet exige la mise en place d'une rallonge d'axe.

Toutefois, un désaxage, même faible, entre l'axe de sortie du dispositif actionneur et la tige de manoeuvre du robinet entraîne l'apparition d'efforts tranchants dans les joints et une fatigue excessive de ceux-ci susceptible de provoquer rapidement des fuites. La solution consistant à intercaler une embase de support du dispositif actionneur entre le corps de robinet et le dispositif actionneur ne peut qu'accroître les risques de désaxage qui sont quasiment inévitables après un certain temps d'utilisation.

Un autre inconvénient de cette solution connue concerne plus particulièrement les robinets munis d'un organe obturateur tournant de forme sphérique ; ces robinets sont constitués essentiellement en trois parties, avec une partie centrale de corps qui abrite la sphère et deux flasques d'extrémité accolés de part et d'autre de cette partie centrale ; l'embase étant quant à elle disposée en pont au-dessus de la partie centrale du corps et fixée par ses extrémités sur le corps ou sur les deux flasques d'extrémité. Dans ce type de robinet, l'accès à l'intérieur de la partie centrale de corps et à la sphère (par exemple pour le remplacement d'un joint) implique le démontage préalable de l'embase, ce qui complique sensiblement les opérations d'entretien du robinet.

L'invention a donc essentiellement pour objet de remédier aux inconvénients précités et de proposer un agencement de robinet qui donne mieux satisfaction aux diverses exigences de la pratique, et en particulier qui maintienne un bon alignement de l'arbre de sortie du dispositif actionneur et de la tige de manoeuvre de l'organe obturateur même après une longue période d'utilisation, qui soit tel que la présence de l'embase ne complique pas les opérations d'entretien y compris dans le cas de robinets à organe obturateur sphérique du type précité, et qui également soit d'un coût de fabrication peu élevé.

A ces fins, un robinet du genre précité agencé conformément à l'invention se caractérise essentiellement en ce que l'embase et le corps de robinet renfermant l'organe obturateur tournant sont constitués sous forme d'une pièce unique monobloc, l'embase étant munie d'un passage traversant pour la tige de manoeuvre et étant munie d'au moins une lumière communiquant avec l'extérieur.

Grâce à cet agencement, les défauts d'alignement introduits par les jeux des moyens de montage de l'embase sur le corps, dans les agencements antérieurs, sont éliminés ; en outre, les trous de fixation du dispositif actionneur peuvent être positionnés par rapport au passage d'axe avec toute la précision souhaitée. Il en résulte que le dispositif actionneur peut être monté sur l'embase de manière telle que son axe soit parfaitement coaxial à la tige de manoeuvre du robinet et que cette coaxialité soit conservée même après une longue durée de fonctionnement, ce qui élimine les inconvénients rencontrés dans les appareils antérieurs.

La présence d'une ouverture dans l'embase évite la mise en pression du volume intérieur de celle-ci et la pénétration du fluide dans le dispositif actionneur en cas de fuite au passage de la tige du robinet. Le fluide issu de cette fuite éventuelle peut s'écouler par cette ouverture et il est en outre possible de la détecter visuellement.

Avantageusement, la pièce unique monobloc regroupant le corps de robinet ou la partie du corps de robinet renfermant l'organe obturateur tournant et l'embase est moulée.

Dans un exemple de réalisation, l'embase comprend un plateau supérieur agencé pour le support du dispositif actionneur et une région intermédiaire de liaison s'étendant entre ledit plateau et le corps de robinet ou la partie de corps du robinet, la lumière précitée étant prévue dans la paroi latérale de cette région intermédiaire de liaison de l'embase. Il est ainsi possible de réaliser la région intermédiaire de liaison avec une dimension transversale adaptée aux dimensions du corps ou de la partie du corps de robinet dont elle est solidaire, de manière que sa présence n'apporte aucune gêne dans l'environnement immédiat du corps ou de la partie de corps du robinet, tandis que le plateau, qui se trouve écarté du corps de robinet, peut être réalisé dans des dimensions aussi importantes que nécessaires en fonction des dimensions propres du dispositif actionneur.

On peut faire en sorte que le bord inférieur de la lumière affleure la surface externe du corps de robinet ou de la partie de corps du robinet. On évite ainsi que le fluide provenant des fuites éventuelles précitées ou de sources extérieures (comme par exemple les eaux de ruissellement) stagne à l'intérieur de l'embase.

L'invention s'applique de manière particulièrement avantageuse aux robinets dans lesquels l'organe obturateur tournant est sphérique ; le corps de robinet comporte alors une partie centrale de corps renfermant cette sphère obturatrice et deux flasques d'extrémité accolés de part et d'autre de cette partie centrale de corps ; dans ce cas, il est souhaitable que l'embase soit solidaire de la partie centrale du corps renfermant la sphère obturatrice. Dans des réalisations classiques de robinets à organe obturateur sphérique, les trois pièces constituant le corps du robinet ne sont traversées que par deux tirants supérieurs, tandis que deux tirants inférieurs relient les deux flasques en passant à l'extérieur de la partie centrale du corps. L'accès à l'intérieur du robinet s'effectue en démontant un seul des tirants supérieurs et en faisant pivoter la partie centrale du corps : la présence de l'embase sur cette partie centrale n'apporte aucune gêne à ce processus, et il n'est pas besoin de procéder à un démontage plus complet du robinet, comme c'était au contraire le cas pour les robinets équipés d'une embase rapportée.

L'invention sera mieux comprise à la lecture de la description détaillée qui suit d'un mode de réalisation préféré donné uniquement à titre d'exemple illustratif. Dans cette description, on se réfère au dessin annexé sur lequel :

- la figure 1 est une vue d'ensemble de côté, en coupe partielle, d'un robinet agencé conformément à l'invention et équipé d'un dispositif actionneur, la partie centrale du robinet étant vue en coupe selon la ligne I-I de la fig. 2

- la figure 2 montre, sur la demi-vue de gauche, une vue en bout de la partie centrale du robinet de la fig. 1, agencée selon l'invention, et la demi-vue de droite, une coupe de cette même partie selon la ligne II-II de la fig. 1 ; et

- la figure 3 montre, sur la demi-vue supérieure, une vue de dessus de la partie centrale du robinet des fig. 1 et 2 et, sur la demi-vue inférieure, une coupe de cette même partie, selon la ligne III-III de la fig. 2.

Dans l'exemple représenté sur les figures, le robinet 1 est un robinet à organe obturateur tournant sphérique 2 ; le corps comprend une partie centrale de corps 3 renfermant la sphère obturatrice 2 et deux flasques d'extrémité 4. Des sièges annulaires d'étanchéité 5 sont interposés entre la partie centrale 3 et les flasques d'extrémité 4 et assurent une étanchéité bidirectionnelle.

Une tige de manoeuvre 6, solidaire en rotation de la sphère obturatrice 2, traverse vers le haut (sur le dessin) -de façon étanche- la partie centrale 3 du corps.

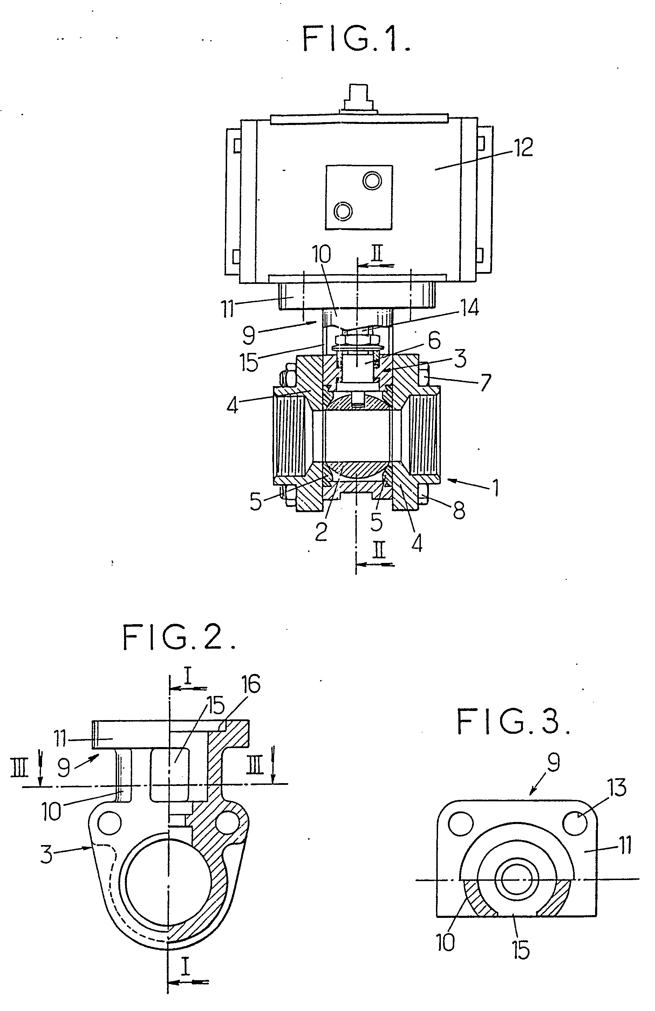

Quatre tirants assurent l'assemblage des trois pièces constituant le corps du robinet. Deux tirants supérieurs 7 traversent les deux flasques 4 et la partie centrale 3, tandis que deux tirants inférieurs 8 traversent uniquement les deux flasques 4 en passant à l'extérieur de la partie centrale 3 (laquelle présente un contour inférieur circulaire comme visible à la fig. 2). L'accès à l'intérieur du robinet (pour le remplacement des sièges d'étanchéité notamment) s'effectue en démontant uniquement un seul des tirants supérieurs et faisant pivoter la partie centrale 3 autour du tirant supérieur maintenu en place.

Conformément à l'invention, une embase creuse 9 est prévue solidaire de la partie centrale 3, en formant avec celle-ci une pièce monobloc, par exemple venue directement de moulage. L'embase 9 comprend une partie intermédiaire de liaison 10 surmontée par un plateau 11 conformé et dimensionné pour recevoir un dispositif actionneur 12 (par exemple un moteur pneumatique) ; ce plateau peut être réalisé conformément aux normes internationales relatives au raccordement des actionneurs.

Le plateau 11 est muni de trous de fixation 13 pour le dispositif actionneur 12 dont le positionnement par rapport à l'axe de l'évidement central est précis, ce qui, conjointement avec l'absence de tout jeu de positionnement entre l'embase et le corps de robinet, conduit à une coaxialité parfaite de la tige de manoeuvre 6 et de l'arbre de sortie 14 du dispositif actionneur qui sont accouplés l'un à l'autre.

Le plateau 11 est muni d'un évidement 16, circulaire dans l'exemple représenté, destiné à coopérer avec un épaulement dont est muni l'actionneur 12.

La partie intermédiaire de liaison 10 de l'embase constitue une partie tubulaire dans la paroi de laquelle est prévue au moins une ouverture 15 destinée à mettre le volume intérieur de cette partie intermédiaire de liaison 10 en communication avec l'atmosphère. On évite ainsi une mise en pression du susdit volume intérieur de la partie 10 en cas de fuite au niveau du passage de la tige de manoeuvre 6 à travers la partie de corps 3 et une pénétration de fluide à l'intérieur du dispositif actionneur 12 dont l'arbre de sortie 14 n'est pas monté de façon étanche à la pression.

Dans l'exemple représenté, on prévoit deux ouvertures 15 diamétralement opposées, qui s'étendent verticalement depuis le plateau 11 jusqu'à la surface externe de la partie centrale 3 du corps. De la sorte, le fluide provenant de la fuite peut s'écouler et ne stagne pas, tandis que ces ouvertures de dimensions relativement importantes permettent une détection visuelle des fuites. Le fait que les ouvertures 15 s'étendent jusqu'à la face externe de la partie centrale 3 du corps permet de s'affranchir des problèmes liés à la stagnation, autour de la tige de manoeuvre 14, de fluides externes, comme par exemple les eaux de ruissellement.

.Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

**Revendications**

1. Robinet (1) comportant un organe obturateur tournant (2) muni d'une tige de manoeuvre (6) saillant hors du corps de robinet renfermant ledit organe obturateur, ce robinet étant en outre équipé d'une embase (9) solidaire du corps de robinet et agencée pour supporter un dispositif actionneur (12) accouplé à la susdite tige de manoeuvre (6), caractérisé en ce que l'embase (9) et le corps de robinet ou une partie (3) du corps de robinet renfermant l'organe obturateur tournant sont constitués sous forme d'une pièce unique monobloc, l'embase étant munie d'un passage traversant pour la tige de manoeuvre et étant munie d'au moins une lumière (15) latérale faisant communiquer ledit passage avec l'extérieur.

2. Robinet selon la revendication 1, caractérisé en ce que le bord inférieur de la lumière (15) affleure la surface externe du corps de robinet ou de la partie (3) de corps du robinet.

3. Robinet selon la revendication 1 ou 2, caractérisé en ce que l'embase (9) comprend un plateau supérieur (11) agencé pour le support du dispositif actionneur (12) et une région intermédiaire de liaison (10) s'étendant entre ledit plateau et le corps de robinet ou la partie de corps du robinet, la lumière précitée (15) étant prévue dans la paroi latérale de cette région intermédiaire de liaison (10) de l'embase.

4. Robinet selon l'une quelconque des revendications 1 à 3 dans lequel l'organe obturateur tournant (6) est sphérique, le corps de robinet comportant une partie centrale de corps (3) renfermant cette sphère obturatrice et deux flasques d'extrémité (4) accolés de part et d'autre de cette partie centrale de corps (3), caractérisé en ce que l'embase (9) est solidaire de la partie centrale du corps (3) renfermant la sphère obturatrice (6).

EP 0 373 090 A1

# FIG.1.

# FIG.2.

# FIG.3.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 531 081 (D. SCARAMUCCI) <br> * figures 4,12,13, références 44,414 * <br> --- | 1-4 | F 16 K   5/06 <br> F 16 K  31/04 |
| A | US-A-3 599 932 (D. SCARAMUCCI) <br> * figures 1,2 * <br> ----- | 1 | |
| | | | **DOMAINES TECHNIQUES RECHERCHES (Int. Cl.5)** |
| | | | F 16 K |

Le présent rapport a été établi pour toutes les revendications

| Lieu de la recherche | Date d'achèvement de la recherche | Examinateur |
|---|---|---|
| BERLIN | 08-02-1990 | SCHLABBACH M |